# EUROPEAN PATENT APPLICATION

(11) **EP 0 994 600 A2**
(43) Date of publication of application: **19.04.2000**
(21) Application number: 99306665.3
(22) Date of filing: 23.08.1999
(51) Int. Cl.: H04L 12/18, H04L 29/06

(54) **Method and apparatus for a secure multicast transmission**

(30) Priority: 13.10.1998 US 170516
(71) Applicant: AT&T Corp., New York, NY 10013-2412 (US)
(72) Inventor: Bhagavath, Vijay K., Lincroft, New Jersey 07738 (US); O'Neil, Joseph Thomas, Staten Island, New York 10312 (US)
(74) Representative: Suckling, Andrew Michael

(57) **Abstract**

A method and apparatus for a secure multicast transmission is provided. A secure multicast transmission reservation, received at a multicast session security platform, is sent from a sender of a secure multicast transmission and may include, for example, information about the secure multicast transmission and information about which multicast receivers are authorized to receive the secure multicast transmission. The multicast session security platform also receives a request for security information from a requesting multicast receiver. The multicast session security platform may include, for example, a multicast session security server capable of communicating with a plurality of senders and a plurality of requesting receivers. It is determined, using information from the reservation, if the requesting receiver is authorized to receive the secure multicast transmission. If so, multicast transmission security information, such as IPSEC SA information needed to receive the secure multicast transmission, is sent to the requesting receiver.

## Description

### Field of the Invention

The present invention relates to multicast transmissions. More particularly, the present invention relates to a method and apparatus that may be used to provide a secure multicast transmission.

### Background of the Invention

Many different types of information can be sent through a data communication network such as the Internet. The types of information include, for example, streams of text (including software), images (including still and moving images) and audio information. Streams that combine different types of information, such as multimedia content, can be transmitted as well.

A communication network user can request an information stream directly from an information source, or "sender," which responds to the request by sending the stream to the user. This method of sending an information stream from a single point, such as the sender, to a single point, such as the user, is called a "unicast" transmission. The sender may also "broadcast" the information stream through the communication network by sending the information to routers in the communication network even if no user downstream from a particular router is going to receive the stream.

Both unicast and broadcast transmissions, however, can be very inefficient. With a unicast transmission scheme if the sender wishes to send information to a number of receivers, the sender must transmit a number of separate streams of information into the network, even though each stream contains exactly the same information. Moreover, each stream must be individually handled by communication nodes, or routers, in the network. Such an approach can result in an unacceptable amount of traffic in the network. A broadcast transmission can be inefficient because some routers may be tied up handling information streams even if no user downstream from a particular router receives the information, which is also inefficient.

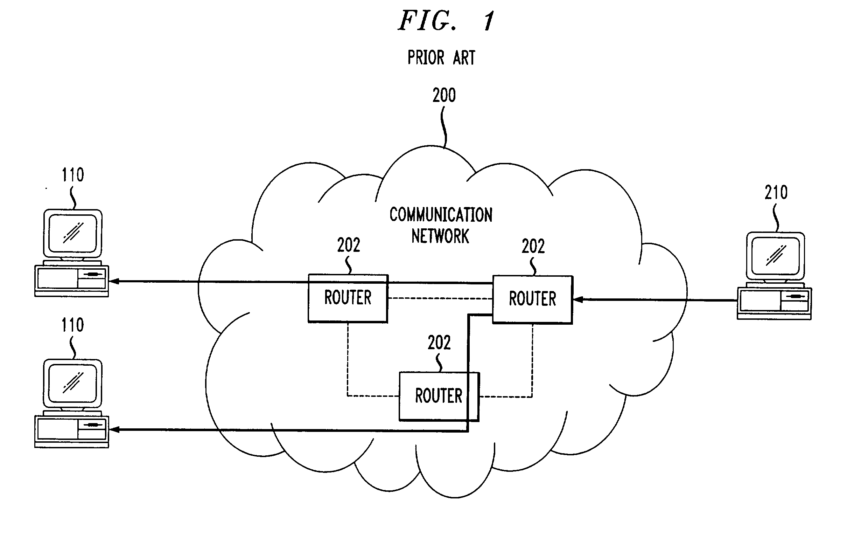

As an alternative to a unicast or broadcast transmission, the information stream can be sent from a single point to multiple points. This method of sending information, called a "multicast" transmission, is illustrated in FIG. 1, which shows a block diagram of a known system for transmitting a multicast information stream through a communication network 200. The communication network 200 has a number of multicast-capable routers 202, and information enters the network as a single stream from a multicast device 210, or sender, to a one of those routers 202. As the stream travels trough the network 200, the routers 202 divide the stream into multiple streams as required to send the information downstream to other routers 202 and/or to locally attached interested devices 110, or "receivers." A user who wants to receive a particular multicast transmission can, for example, use Internet Group Management Protocol (IGMP) to send a "join" message to a local multicast-capable router 202.

Note that with a multicast transmission, the link between the sender 210 and the communication network 200 only needs to carry a single stream of multicast information.

Depending on the nature of the multicast transmission, the sender 210 and/or receiver 110 of a multicast stream may desire to make the transmission "secure." For example, the parties may want to make sure that the transmission is not received by other, "unauthorized," receivers. The parties may also need to verify that the transmission actually originates from the sender 210 and has not been tampered with or altered. To provide this type of security, multicast transmission security information can be used by both the sender 210 and the receiver 110. The Internet Protocol version 6 (IPv6) Internet Protocol Security (IPSEC) standard is one example of an architecture that can be used to provide a secure multicast transmission, and is described in Kent Stephen, "Security Architecture for the Internet Protocol," Network Working Group (July 1998), the entire disclosure of which is hereby incorporated by reference. The IPSEC protocol defines, for example, Authentication Header (AH) and Encapsulating Security Payload (ESP) headers, which are generally transparent to applications and routers, that can be used to provide a secure transmission. Both the AH and ESP headers contain a Security Parameter Index (SPI) which, along with an IP destination address, identifies a Security Association (SA) needed to receive the multicast transmission. In general, for example, IPSEC AH information provides integrity checking information that lets a receiver detect if a packet was forged or modified while traveling across a data network.

Typically, each receiver 110 needs to individually request the multicast transmission security information from the sender 210. The sender 210 then determines if a requesting receiver 110 is authorized to receive the secure multicast transmission, and, if so, separately delivers the multicast transmission security information to each receiver 110. The receivers 110 can then use the multicast transmission security information to, for example, decode a secure multicast transmission from the sender 210.

This approach, however, may not be practical if the sender 210 needs to send a secure multicast transmission to a large number of receivers 110. In this case, the sender 210 must individually communicate, for example, with tens of thousands requesting receivers 110, often simultaneously, and separately process each request. Moreover, a large number of separate responses, including the multicast transmission security information, must be sent back through the communication network 200. This eliminates some of the benefits of using multicast technology, such as, for example, letting the link between the sender 210 and the communication network 200 carry only a small amount of information.

Another problem with known methods of providing multicast transmission security information is that the information each receiver 110 must provide to demonstrate that he or she is authorized to receive the secure multicast transmission may be sensitive. Such information may include, for example, a credit card number or home address, and people may hesitate to provide this type of information to an unfamiliar sender 210. In addition, a sender 210 may need to coordinate billing and collection procedures for a large number of receivers 110, which can be a difficult task.

In view of the foregoing, it can be appreciated that a substantial need exists for a method and apparatus that provides multicast transmission security information and solves the problems discussed above.

### Summary of The Invention

The disadvantages of the art are alleviated to a great extent by a method and apparatus that provides multicast transmission security information. A secure multicast transmission reservation is received at a multicast session security platform. The reservation is received from a sender of a secure multicast transmission and may include, for example, information about the secure multicast transmission and information about which multicast receivers are authorized to receive the secure multicast transmission. The multicast session security platform also receives a request for security information from a requesting multicast receiver. The multicast session security platform may include, for example, a multicast session security server capable of communicating with a plurality of senders and a plurality of requesting receivers. It is determined, using information from the reservation, if the requesting receiver is authorized to receive the secure multicast transmission. If so, the multicast transmission security information, such as the SA information needed to receive the secure multicast transmission, is sent to the requesting receiver. The SA information may comprise, for example, an authentication key, and authentication key and a key life-time, along with other information.

With these and other advantages and features of the invention that will become hereinafter apparent, the nature of the invention may be more clearly understood by reference to the following detailed description of the invention, the appended claims and to the several drawings attached herein.

### Brief Description of The Drawings

FIG. 1 is a block diagram of a known system that transmits a multicast information stream through a communication network.
FIG. 2 is a block diagram including a system that provides multicast transmission security information according to an embodiment of the present invention.
FIG. 3 is a more detailed block diagram of a system that provides multicast transmission security information according to an embodiment of the present invention.
FIG. 4 is a flow diagram of a method for providing multicast transmission security information according to an embodiment of the present invention.

### Detailed Description

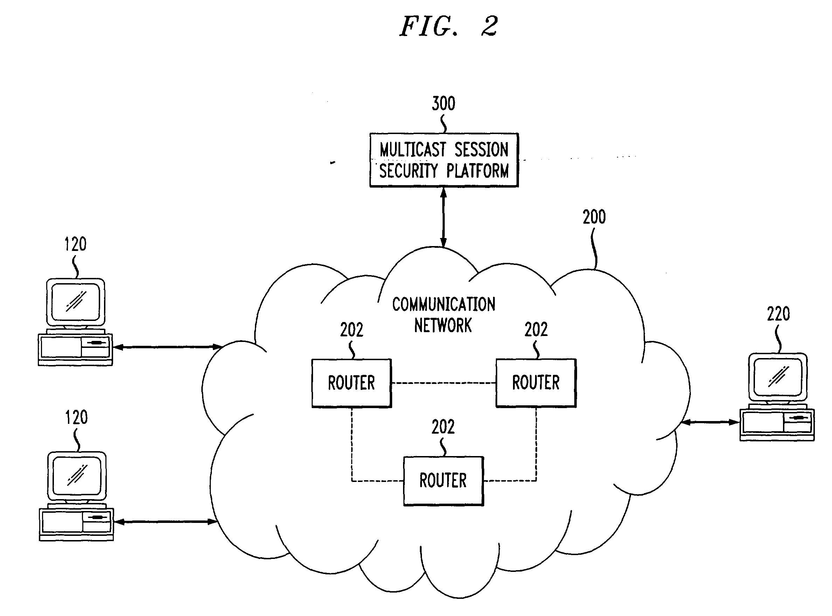

The present invention is directed to a method and apparatus that provides multicast transmission security information. Referring now in detail to the drawings wherein like parts are designated by like reference numerals throughout, there is illustrated in FIG. 2 a block diagram including a multicast session security platform 300 that provides multicast transmission security information for a communication network 200 according to an embodiment of the present invention. The communication network 200 comprises a number of multicast-capable routers 202 that let a sender 220 transmit a multicast information stream to a number of receivers 120.

According to an embodiment of the present invention, the multicast session security platform 300 receives a secure multicast transmission reservation from the sender 220 of a secure multicast transmission. The reservation may include, for example, information about the secure multicast transmission such as the title, date, time of day and duration of the transmission.

The reservation may also include the particular security information, such as a group key or a IPSEC SA, needed to receive the secure multicast transmission, and information about which multicast receivers 120 are authorized to receive the secure multicast transmission. For example, a franchisor corporation may want to send a multicast transmission containing sensitive financial information to a number of franchisee corporations. In this case, the reservation may include a list of authorized names and passwords associated with each franchisee corporation.

Instead of a list of authorized receivers, the reservation may include billing information, such as a price that must be paid by a requesting receiver 120 before he or she will be authorized to receive the multicast transmission. For example, the reservation may indicate that anyone who pays five dollars is authorized to receive a particular multicast transmission of movie.

The multicast session security platform 300 also receives a request for multicast transmission security information from a requesting multicast receiver 120. The request may be received using a secure transmission, such as a secure unicast IPSEC transmission. The seccure unicast transmission may be established using known public key techniques. As part of the initial request, or through some further interaction after the initial request, the receiver 120 will provide information to the multicast session security platform 300, such as, for example, (a) the name or nature of the multicast transmission the receiver 120 wants to receive, (b) an identifier, such as a name and password, associated with the receiver 120 and/or (c) a credit card number or other billing information.

The multicast session security platform 300 then determines if the requesting multicast receiver 120 is authorized to receive the secure multicast transmission. This may be done, for example, by comparing the name and password of the receiver 120 with a list of authorized names and passwords contained in the reservation. If the requesting multicast receiver 120 is authorized, the multicast session security platform 300 responds with the multicast transmission security information, such as the IPSEC SA information. The approved receiver 120 can then use this information to receive the secure multicast transmission from the sender 220.

According to an embodiment of the present invention, the multicast session security platform 300 may be configured to handle reservations and requests from a large number of senders 220 and receivers 120. For example, the multicast session security platform 300 may have a number of pre-approved subscribers who are authorized to receive certain types of multicast transmissions or transmissions from certain senders 220. As shown in FIG. 2, the multicast session security platform 300 may send the security information to a number of personal computers. If desired, however, the platform could send the information to, for example, a secure telephone or fax machine, a wireless Personal Digital Assistant (PDA) or any other type of communication device. In addition, the security information may be sent through the same communication network 200 that will be used to transmit the secure multicast session, or through some other communication network.

Moreover, the multicast session security platform 300 may transmit statistics to the sender 220, such as the total number of currently approved receivers 120 or a total amount of money that has been collected from those receivers 120.

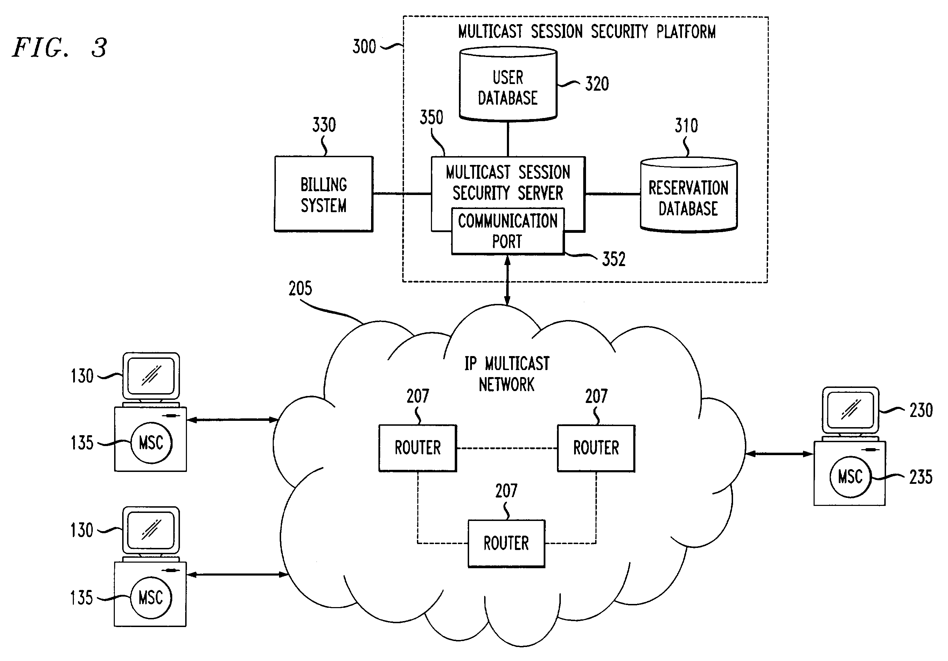

FIG. 3 is a more detailed block diagram of a system that provides multicast transmission security information for an IP multicast network 205 according to an embodiment of the present invention. A multicast session security platform 300 includes a multicast session security server 350 connected to IP multicast network 205 through a communication port 352 (e.g., an Ethernet port). The IP multicast network 205 is comprised of a number of IP multicast-capable routers 207, and the Multicast Backbone (MBone) is one example of such a communication network.

According to an embodiment of the present invention, the multicast session security server 350 receives a secure multicast transmission reservation from a sender 230 of a secure multicast transmission. This may be done, for example, using a Multicast Security Client (MSC) application 235 installed on the sender 230 and configured with the IP address of one or more multicast session security servers 350. The multicast session security server 350 and the MSC application 135 may be configured to let the sender 230 submit the reservation using a communication network information page, such as a World Wide Web ("Web") page transmitted through the Internet.

As described above with respect to FIG. 2, the reservation may include, for example, (a) the title, date, time of day and duration of the transmission, (b) an IPSEC SA - such as one using the Internet Security Association and Key Management Protocol (ISAKMP) framework - needed to receive the transmission, (c) a list of names and passwords associated with authorized receivers 130 and/or (d) an admission policy, such as a price that must be paid by each requesting receiver 130 before he or she will be authorized to receive the transmission. The reservation information may be stored in a reservation database 310 along with reservations for other multicast transmissions and/or other multicast senders 230.

The multicast session security server 350 also receives a request for multicast transmission security information from a number of requesting multicast receivers 130. This may be done using, for example, a MSC application 135 running on the receiver 130, which may be configured to let a receiver request the security information through a Web page. This request may be generated by the MSC application 135 without any explicit action by a user. Note that, if required, a multicast-unicast gateway may be installed between the IP multicast network 205 and either the sender computer 230 or the receiver computer 130. The request may be received using a secure transmission, such as a secure unicast IPSEC transmission, and may include, for example, the name of a multicast transmission, a requesting name and password, and a credit card number. User information, such as information associated with a subscriber of the multicast session security platform 300, may also be stored in a user database 320. Such information may include the type of multicast transmissions a subscriber is authorized to receive, or other information based on, for example, a form filled out by the user when he or she subscribes to the service.

The multicast session security server 350 then determines if a requesting multicast receiver 130 is authorized to receive the secure multicast transmission. If the requesting multicast receiver 130 is authorized, the multicast session security server 350 responds with the multicast transmission security information, such as the IPSEC SA information. The SA information is used to establish the specific implementation of IPSEC protection that will be used during the secure multicast transmission. The SA information may indicate, for example, what types of keys are required and how the transmission will be encrypted or authenticated. The SA information may also include a specific destination IP address, authentication key, session key and SPI that are needed to receive the multicast transmission. The approved receiver 130 may then use this information to receive the secure multicast transmission from the sender 230. Note that the information may requested, received and used by an approved receiver 130 - all without the user being aware of the operation, if desired.

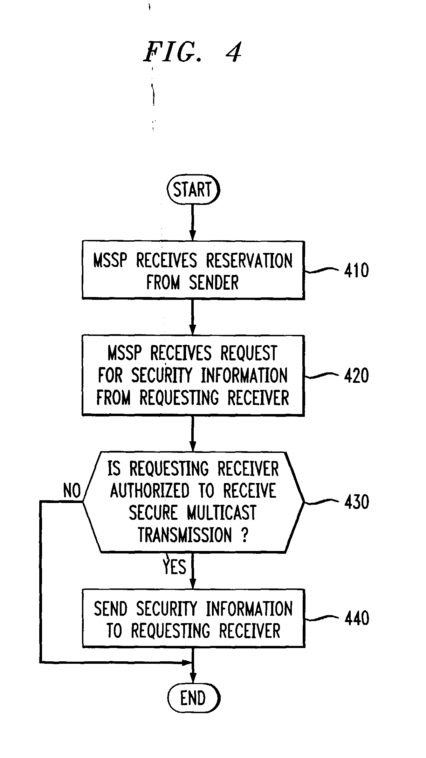

FIG. 4 is a flow diagram of a method that provides multicast transmission security information for a communication network, such as the Internet, according to an embodiment of the present invention. At step 410, a secure multicast transmission reservation is received at a Multicast Session Security Platform (MSSP). The reservation is received from a sender of a secure multicast transmission and may include, for example, information about the secure multicast transmission and information about which multicast receivers are authorized to receive the secure multicast transmission.

The multicast session security platform also receives a request for security information from a requesting multicast receiver as indicated at step 420. The multicast session security platform may include, for example, a multicast session security server capable of communicating with a plurality of senders and a plurality of requesting receivers. It is determined, using information from the reservation, if a requesting receiver is authorized to receive the secure multicast transmission at step 430. If so, the multicast transmission security information, such as IPSEC SA information needed to receive the secure multicast transmission, is sent to the requesting receiver at step 440.

Although various embodiments are specifically illustrated and described herein, it will be appreciated that modifications and variations of the present invention are covered by the above teachings and within the purview of the appended claims without departing from the spirit and intended scope of the invention. For example, although particular system architectures were used to illustrate the present invention, it can be appreciated that other architectures may be used instead. Similarly, although particular types of security protocols have been illustrated, other security protocols will also fall within the scope of the invention. Finally, although software or hardware are described to control certain functions, such functions can be performed using either software, hardware or a combination of software and hardware, as is well known in the art. As is also known, software may be stored on a medium, such as, for example, a hard or floppy disk or a Compact Disk Read Only Memory (CD-ROM), in the form of instructions adapted to be executed by a processor. The instructions may be stored on the medium in a compressed and/or encrypted format. As used herein, the phrase "adapted to be executed by a processor" is meant to encompass instructions stored in a compressed and/or encrypted format, as well as instructions that have to be compiled or installed by an installer before being executed by the processor.

## Claims

1. A method of supplying multicast transmission security information to a plurality of requesting multicast receivers, the multicast transmission security information being configured to enable receipt of a secure multicast transmission, comprising the steps of:
establishing an individual secure unicast channel for each of the plurality of requesting multicast receivers, the secure unicast channels being established using security information different from the multicast transmission security information;
receiving, through the secure unicast channel, authorization information from each of the plurality of requesting multicast receivers;
determining if each of plurality of requesting multicast receivers is authorized to receive the secure multicast transmission; and
sending, through the secure unicast channel, the multicast transmission security information to each of the authorized requesting multicast receivers.

2. The method of claim 1, wherein the multicast transmission security information comprises Internet Protocol Security (IPSEC) information needed to receive the secure multicast transmission.

3. A method for providing multicast transmission security information, comprising the steps of:
receiving, at a multicast session security platform, a secure multicast transmission reservation from a sender of a secure multicast transmission, the secure multicast transmission reservation comprising information about the secure multicast transmission;
receiving, at the multicast session security platform, a request for the multicast transmission security information from a requesting multicast receiver; and
determining if the requesting multicast receiver is authorized to receive the secure multicast transmission.

4. The method of claim 3, further comprising:
sending the multicast transmission security information to the requesting multicast receiver if the requesting multicast receiver is authorized to receive the secure multicast transmission.

5. The method of claim 3, wherein the secure multicast transmission reservation further comprises information about which multicast receivers are authorized to receive the secure multicast transmission, and wherein said step of determining is performed using information from the secure multicast transmission reservation.

6. The method of claim 3, wherein the secure multicast transmission reservation further comprises the multicast transmission security information.

7. The method of claim 4, wherein said step of receiving comprises receiving a plurality of requests for the multicast transmission security information from a plurality of requesting multicast receivers, and wherein said steps of determining and sending are performed for each of the plurality of requesting multicast receivers.

8. The method of claim 3, wherein the multicast transmission security information comprises Internet Protocol Security (IPSEC) information needed to receive the secure multicast transmission.

9. The method of claim 8, wherein the IPSEC information comprises Security Association (SA) information needed to receive the secure multicast transmission.

10. The method of claim 3, wherein said step of receiving comprises receiving the request for multicast transmission security information as a unicast Internet Protocol Security (IPSEC) transmission.

11. The method of claim 3, further comprising the step of:
receiving billing information from the requesting multicast receiver.

12. The method of claim 7, wherein said step of determining is performed using the billing information received from the requesting multicast receiver.

13. The method of claim 3, further comprising the step of:
sending billing information to the sender of the secure multicast transmission.

14. The method of claim 3, wherein the secure multicast transmission reservation is received using a communication network information page.

15. The method of claim 3, wherein the request for multicast transmission security information is received using a communication network information page.

16. A method for providing Internet Protocol Security (IPSEC) Security Association (SA) information related to a secure multicast transmission, comprising the steps of:
receiving, at a multicast session security platform, a secure multicast transmission reservation from a sender of the secure multicast transmission, wherein the secure multicast transmission reservation includes the IPSEC SA information and information about authorized multicast receivers;
receiving, at the multicast session security platform, a plurality of requests for the IPSEC SA information from a plurality of requesting multicast receivers;
determining if each of the plurality of requesting multicast receivers is authorized to receive the IPSEC SA information based on information about authorized multicast receivers contained in the secure multicast transmission reservation; and
sending the IPSEC SA information to authorized requesting multicast receivers.

17. A multicast session security platform, comprising:
a first communication port configured to receive a secure multicast transmission reservation, including multicast transmission security information and information about authorized multicast receivers, from a sender of a secure multicast transmission;
a second communication port configured to receive a plurality of requests for the multicast transmission security information from a plurality of requesting multicast receivers; and
a server system coupled to said first and second communication ports, said server system being configured to determine if each of the plurality of requesting multicast receivers is authorized to receive the multicast transmission security information based on the information about authorized multicast receivers contained in the secure multicast transmission reservation.

18. An article of manufacture comprising a computer-readable medium having stored therein instructions adapted to be executed by a processor, the instructions which, when executed, define a series of steps for providing multicast transmission security information, said steps comprising:
receiving, at a multicast session security platform, a secure multicast transmission reservation from a sender of a secure multicast transmission, the secure multicast transmission reservation comprising information about the secure multicast transmission;
receiving, at the multicast session security platform, a request for the multicast transmission security information from a requesting multicast receiver; and
determining if the requesting multicast receiver is authorized to receive the secure multicast transmission.

19. The medium of claim 18, wherein the steps further comprise:
sending the multicast transmission security information to the requesting multicast receiver if the requesting multicast receiver is authorized to receive the secure multicast transmission.

20. The medium of claim 18, wherein the secure multicast transmission reservation further comprises information about which multicast receivers are authorized to receive the secure multicast transmission, and wherein the step of determining is performed using information from the secure multicast transmission reservation.

21. An article of manufacture comprising a computer-readable medium having stored therein instructions adapted to be executed by a processor, the instructions which, when executed, define a series of steps for receiving multicast transmission security information, said steps comprising:
sending a request for the multicast transmission security information to a multicast session security platform, the request including at least one of (a) user identification information, (b) billing information and (c) multicast transmission identification information;
receiving the multicast transmission security information from the multicast session security platform; and
receiving, using the multicast transmission security information, a secure multicast transmission from a sender other than the multicast session security platform.
